# EUROPEAN PATENT SPECIFICATION

(11) **EP 3 463 750 B1**
(45) Date of publication and mention of the grant of the patent: **27.10.2021**
(21) Application number: 17728519.4
(22) Date of filing: 01.06.2017
(51) Int. Cl.: B24B 7/18, B25G 1/00, B25G 3/38, B25F 5/02

(54) **FLOOR GRINDING MACHINE, HANDLE FOR FLOOR GRINDING MACHINE AND METHOD OF SETTING THE POSITION OF A HANDLE OF A FLOOR GRINDING MACHINE**
BODENSCHLEIFMASCHINE, GRIFF FÜR EINE BODENSCHLEIFMASCHINE UND VERFAHREN ZUM EINSTELLEN DER POSITION EINES GRIFFS EINER BODENSCHLEIFMASCHINE
MACHINE DE MEULAGE DE SOL, POIGNÉE POUR MACHINE DE MEULAGE DE SOL ET PROCÉDÉ DE RÉGLAGE DE LA POSITION D'UNE POIGNÉE D'UNE MACHINE DE MEULAGE DE SOL

(30) Priority: 03.06.2016 SE 1650786
(43) Date of publication of application: 10.04.2019
(73) Proprietor: Husqvarna AB, 561 82 Huskvarna (SE)
(72) Inventor: ANDERSSON, Fredrik, 605 91 Norrköping (SE); KÄCKER, David, 605 96 Norrköping (SE); FOGELBERG,Andreas, 614 92 Söderköping (SE)
(74) Representative: Johansson, Fredrik Kristofer
(86) International application number: PCT/EP2017/063373
(87) International publication number: WO 2017/207721

(56) References cited:
- WO-A1-2015/167376
- CN-A- 105 150 041
- US-A- 1 974 136

## Description

### Technical field

The present disclosure relates to floor grinding machines, and in particular to floor grinding machines adapted for grinding floors of stone or stone-like materials, such as limestone, sandstone, marble, slate, granite, concrete or terrazzo. An example of such machine is disclosed in WO 2015/167376 A1, which discloses the preamble of appended claim 1.

### Background

Floor grinding machines are known and used in polishing or grinding floor surfaces, either with the purpose of producing a level and/or glossy floor surface, or with the purpose of renovating such a surface which has deteriorated due to e.g. wear, or which has been damaged.

A floor grinding machine for this type of grinding typically comprises a machine frame, which carries a motor that is operatively connected to a grinding head.

In a particular class of floor grinding machines, such a grinding head may be rotatable relative to the machine frame. The grinding head may carry a plurality of grinding disks, each of which may be rotatable relative to the grinding head. Such a grinding head is typically referred to as a planetary type grinding head.

These floor grinding machines are usually equipped with grinding elements in the form of bonded abrasives, i.e. abrasives in the form of a three-dimensional body comprising abrasive particles and a matrix material, which may be a polymer material or a metallic material. As another option, the machines may be equipped with cutting elements, adapted, for example for removal of glue, paint, lacquer or other surface treatments from a floor surface.

The machine may typically be supported by its grinding head and often also by a pair of wheels, which may be arranged behind the grinding head, as seen in a forward direction of the machine. Optionally, the machine may also be supported by one or more further wheels, which may be used to control the pressure exerted by the grinding head on the floor.

The pair of wheels may be driven. Optionally, they may be individually drivable, such that a direction of travel of the machine may be controlled.

The floor grinding machine may comprise a handle, which is connected to the frame and provides possibility for the operator to hold, push, pull and/or steer the machine.

Typically, the handle comprises a handle frame, which may be adjustable relative to the machine frame. The handle frame may comprise a handle bar and a user interface, which may include buttons, levers and/or indicators, such as lamps, gauges or displays.

One example of a known machine of this type is disclosed in WO03076131 A1. Further examples are disclosed in WO2015167376A1, US1974136A and CN105150014A.

An ergonomic floor grinding machine for users with different body conditions, such as height, arm length and strength, is needed.

Further, the floor grinding machine is big in size, which is not convenient when it is not in use, for example when it is to be stored or transported.

Therefore, there remains a need for an improved floor grinding machine, which can at least partly alleviate above drawbacks.

### Summary

An object of the present disclosure is to provide an improved floor grinding machine for grinding floor surfaces of stone or stone-like materials.

A particular object is to provide a floor surfacing machine which is improved in terms of ergonomics while being compact enough to enable it to be stored or transported.

The invention is defined by the appended independent claims 1 and 12, with embodiments being set forth in the appended dependent claims in the following description and in the attached drawings.

According to a first aspect, there is provided a floor grinding machine for grinding floor surfaces of stone or stone-like material. The machine comprises a machine frame, a grinding head, supported by the machine frame, a motor, supported by the machine frame and operatively connected to the grinding head, and a handle frame, extending from the machine frame, and pivotable relative to the machine frame. The machine further comprises a guide member, which is pivotable relative to the machine frame and pivotable relative to the handle frame, a first locking device, for locking the guide member relative to the handle frame, and a second locking device, for locking the guide member relative to the machine frame.

The floor materials may have a Knoop hardness of more than 130, preferably more than 135 or 140, and may thus comprise stone or stone-like materials, such as limestone, sandstone, marble, slate, granite, concrete or terrazzo.

By using first and second locking devices, it is possible to provide a handle with a memory function, such that the handle quickly can be brought to/from a preferred working position from/to a transport or storage position.

The guide member is pivotable relative to the machine frame coaxially with the handle frame.

The guide member is pivotable relative to the machine frame about a first axis and the handle frame is pivotable relative guide member about a second axis, wherein the first and second axis are coaxial.

The floor grinding machine may further comprise a pivot angle limiting device.

The pivot angle limiting device may limit the pivoting movement between the guide member and one of the machine frame and the handle frame.

The first locking device may provide a continuum of relative positions between the handle frame and the guide member.

The second locking device may provide a continuum of relative positions between the machine frame and the guide member.

Alternatively, or as a supplement, the first locking device may provide at least two fixed relative positions between the handle frame and the guide member.

Moreover, the second locking device may provide at least two fixed relative positions between the machine frame and the guide member.

One of the locking devices may provide a smaller angle between a pair of adjacent fixed positions than the other one.

One of the locking devices may provide a greater angle difference between extreme positions than the other one.

The handle frame may be pivotable relative to the machine frame between at least one transport position and at least one working position.

The transport position may be located such that a movement from the working position to the transport position comprises lifting the handle frame upwardly.

The transport position may be located such that a movement from the working position to the transport position comprises lowering the handle frame.

The handle frame may carry a user interface.

According to a second aspect, there is provided a method for setting a position of a handle of a floor grinding machine for grinding floor surfaces of stone or stone-like material. The method comprises setting a position of a handle frame relative to a guide member, and setting a position of the guide member relative to a machine frame.

In the method, setting a position of a handle frame relative to a guide member may comprise pivoting the handle frame relative to the machine frame and relative to the guide member, and locking the handle frame relative to the guide member.

In the method setting a position of the guide member relative to a machine frame may comprise pivoting the handle frame with the guide member relative to the machine frame, and locking the guide member relative to the machine frame.

### Brief description of the drawings

Figs. 1a-1d are schematic perspective views of a floor grinding machine.
Figs. 2a-2b schematically illustrate the guide member, the first locking device, and the second locking device.
Fig. 3a-3b schematically illustrate a part of the machine frame connected to the guide member of Figs. 2a-2b.
Fig. 4 schematically illustrates a handle frame head.
Fig. 5 schematically illustrates a handle.
Figs 6a-6d schematically illustrate an alternative locking device.
Figs 7a-7b schematically illustrate the machine with the handle in different positions.

### Detailed description

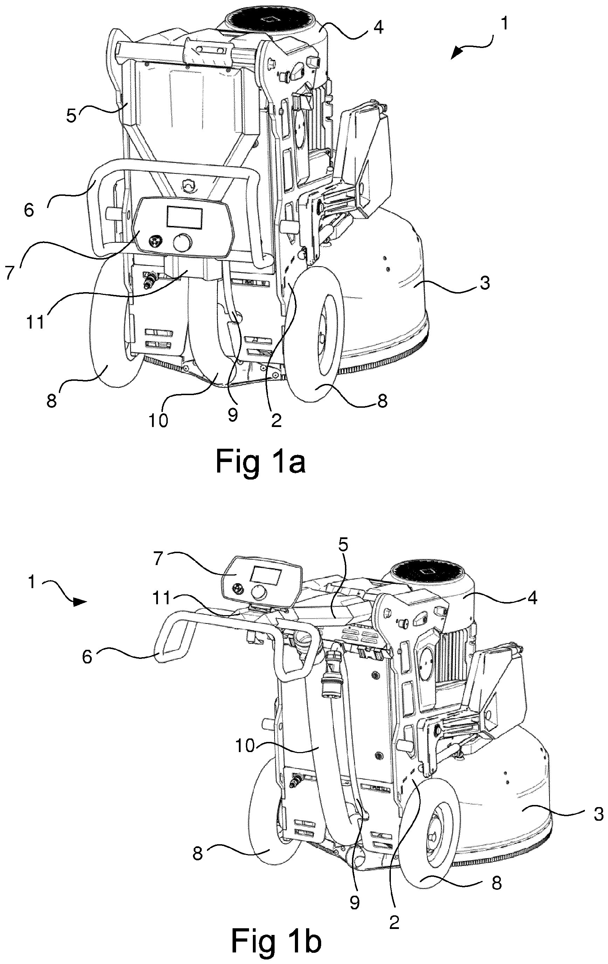

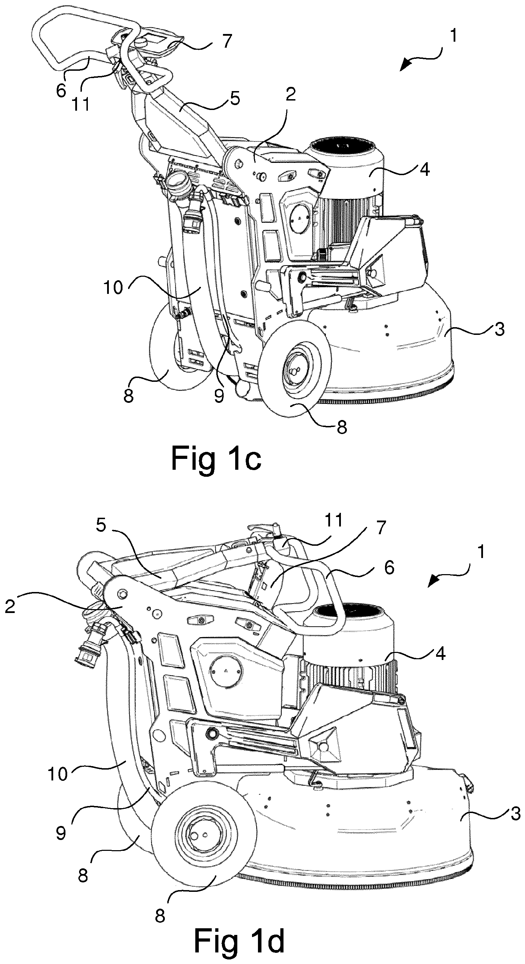

Fig. 1 schematically illustrates a floor grinding machine 1. The grinding machine 1 comprises a machine frame 2 which supports a grinding head 3 and a motor 4. The grinding head 3 is driven by the motor 4 to rotate.

The grinding head 3 may comprise a casing, which is rotatable inside a hood.

The grinding head 3 as illustrated herein is formed as a planetary type grinding head, i.e. the grinding head casing is rotatable relative to the machine frame 2, and in turn carries two or more grinding disks, each of which being rotatable relative to the casing.

The hood may be arranged to enclose the grinding head 3, such that grinding residues are contained and can be readily collected by e.g. a collection device as will be further described.

The machine 1 may thus further comprise a collection device for collecting grinding residues, such as dust, water and the like. The collection device may comprise a hood connector, such that a space enclosed by the hood is in fluid connection with a dust collector, and optionally a channel, such as a hose or a pipe 10. A hose 10 leading to the dust collector, such as a vacuum cleaner, may be directly connectable to the hood connector, or to the channel.

The machine 1 may be supported by wheels, such as by a pair of coaxial wheels 8. The wheels may provide part of the support, with additional, or even most, support provided by the grinding head 3.

The wheels 8 may be freely rotatable, whereby the machine 1 may be propelled entirely by being pushed and/or pulled by the user.

As another option, the wheels 8 may be driven by one or more motors. For example, the wheels may be individually drivable, whereby steering of the machine 1 by e.g. radio control may be enabled.

The machine 1 may comprise a control unit, which contains functionality for controlling the machine 1 and/or feeding back information, such as setting a speed of the rotating discs, and reporting a temperature of the grinding discs.

The machine 1 may further comprise a handle frame 5 extending from an upper rear portion of the machine frame 2. The handle frame 5 may support a handle 6 for a user to grip and/or steer the machine 1, and optionally a user interface 7.

The user interface 7 may comprise an output device, such as a display, which may be a touch screen, for displaying information. The user interface may further comprise one or more input devices, such as a touch screen, buttons, knobs and/or a keyboard for the user to control the machine 1.

As indicated in Figs 1a-1d, the handle frame 5 is pivotable relative to the machine frame 2. In the illustrated example, the handle frame 5 is pivotable between four positions: a lower transport position (Fig. 1a), a lower operating position (Fig. 1b), an upper operating position (Fig. 1c) and an upper transport position (Fig. 1d).

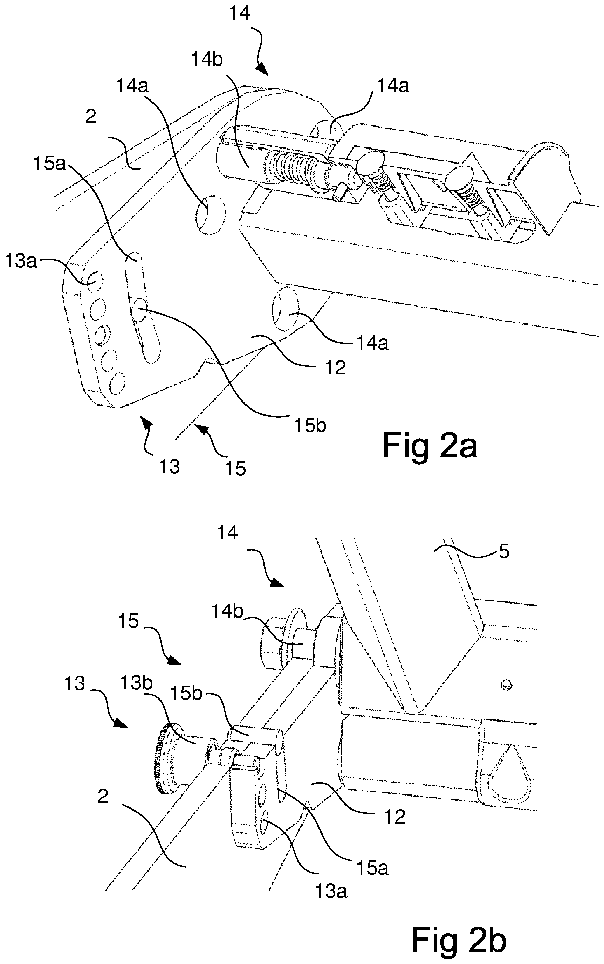

The handle frame 5 may be continuously pivotable, or it may be pivotable between a number of fixed positions. In the illustrated example, the handle frame 5 is pivotable between four fixed positions, as illustrated in Figs 1a-1d. Moreover, the position of the handle frame may be possible to fine tune. This may be done either continuously over a predetermined range, or over a number of fixed predetermined positions, as is illustrated in Fig. 2a.

To this end, the machine 1 comprises a guide member 12, which is pivotable relative to the machine frame 2 and also pivotable relative to the handle frame 5.

To secure the handle frame 5 relative to the guide memer 12, the machine 1 comprises a first locking device 14, for locking the guide member 12 relative to the handle frame 5.

The locking device 14 may comprise a plurality of holes or recesses 14a formed in the guide member 12, each corresponding to one of the positions mentioned with reference to Figs 1a-1d, and a locking pin 14b, which is connected to the handle frame 5. In the illustrated example, the locking pin 14b is connected to the handle frame 5 by means of a spring, which biases the locking pin 14b towards the guide member 12.

It is understood that a similar locking function may be achieved in various ways, such as by means of a bolt, a snaplock device or the like.

The machine 1 further comprises a second locking device 13, for locking the guide member 12 relative to the machine frame 2.

The guide member 12 is be pivotable relative to the machine frame coaxially with the handle frame 5.

The second locking device 13 may provide a continuum of relative positions between the machine frame 2 and the guide member 12.

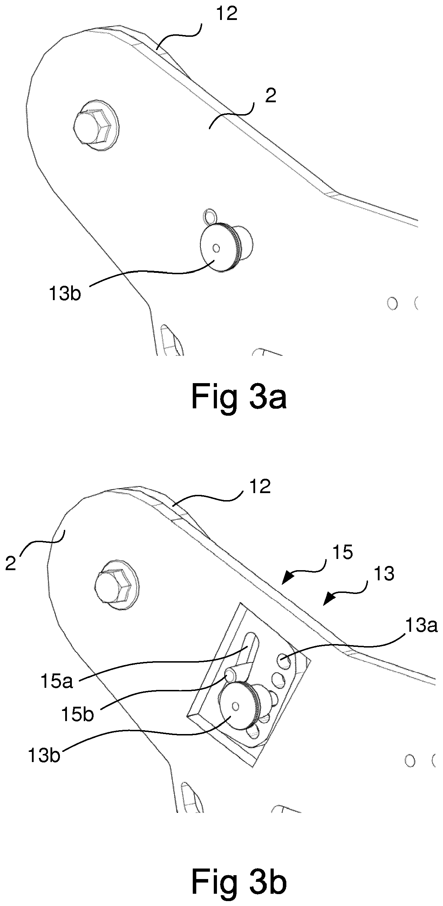

Alternatively, the second locking device 13 may provide at least two predetermined relative positions between the machine frame 5 and the guide member 12. The predetermined relative positions may be provided by the locking holes or recesses 13a, as illustrated in Figs 2a-2b and 3a-3b.

The locking holes or recesses 13a may be formed along a curve following a segment of a circle having its center at the axis of rotation about which the guide member 12 is pivotable.

Optionally, a pivot limiting device 15 may be provided, and may comprise a slit 15a, which together with a guide pin 15b limits the maximum angle of rotation of the guide member 12 relative to the machine frame 2.

The second locking device further comprises a second locking pin 13b, which may be provided with a biasing device for biasing the locking pin towards the hole or recess 13a.

With regard to the handle, the machine may function as follows.

A position selected from, e.g., the four positions illustrated in Figs 1a-1d may be selected by moving the first locking pin 14b towards the right in Fig. 2a, such that the first locking pin 14b is extracted from the hole or recess 14a.

The handle frame 5 may then be pivoted to the desired position. If the pin 14b is held out of the hole or recess 14a, pivoting may be achieved all the way to the desired position. If the pin 14b is released, then it may spring back into the next hole or recess 14a, as soon as it reaches it.

Once in the desired position, the pin 14b is allowed to rest in the hole or recess 14a.

If this desired position is one of the operating positions, then it may be desirable to fine tune the handle position.

This can be done by pulling the second pin 13b out of its associated hole or recess 13a. As the handle frame 5 is locked relative to the guide member 12 by the first locking device 14, the handle frame 5 will now pivot together with the guide member 12 until the pin 13b is released and allowed to spring back into the desired one of the holes or recesses 13a.

By leaving the second locking device 13 in its locked position, it is possible to again release the first locking device 14 and bring the handle frame 5 to one of the transport positions, in order to simplify transportation or storage of the machine 1.

When it is desirable to use the machine 1 again, the first locking device 14 is again released, and the handle frame 5 is pivoted to the desired position. However, now, the handle frame 5 will be brought to the position of the second locking device 13, where this was previously set. Hence, the handle frame 5 is effectively provided with a memory for the preferred setting of the handle frame 5.

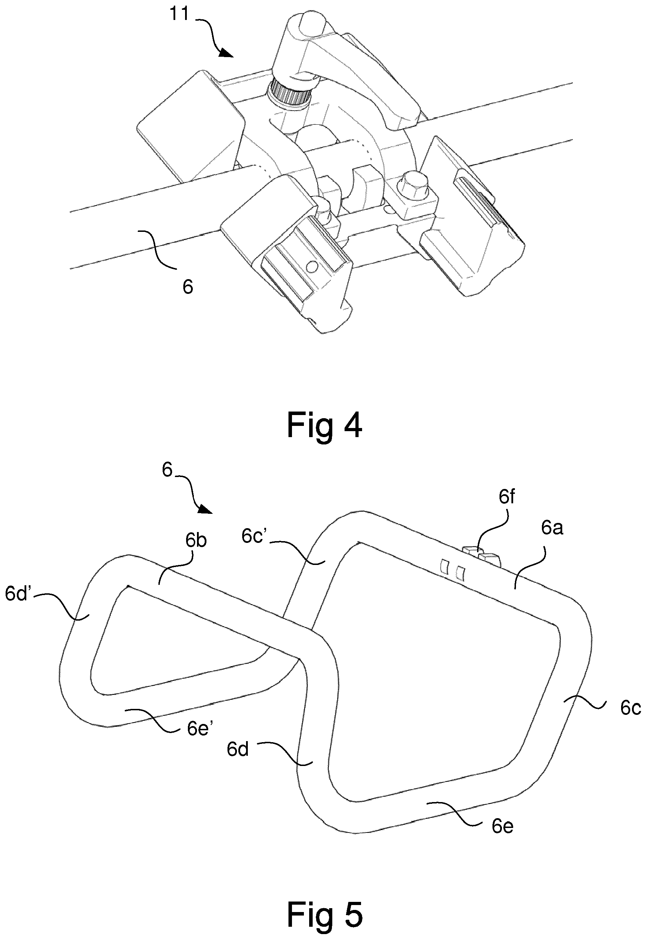

Fig. 4 illustrates a handle connection mechanism, which may be used to connect the handle 6 to the handle frame 5. This connection mechanism may essentially comprise a clamping device 11, which is used to clamp a attachment portion 6f of the handle 6.

The attachment portion 6f may comprise a positioning device, arranged to ensure that the handle 6, when received in the clamping device 11, is always correctly oriented.

This positioning device may also function as a rotation limiting device, which limits the possible positions between the handle 6 and the handle frame 5.

For example, the rotation limiting device may comprise one or more protrusions extending from the attachment portion 6f, and being arranged to cooperate with corresponding supports or abutments in the clamping device 11.

One version of a handle 6 is illustrated in Fig. 5.

The handle 6 comprises an attachment portion 6f, by which the handle 6 is attachable to a handle frame 5 of the machine 1. From the attachment portion 6f, cross portions 6a extend laterally and substantially horizontally towards both sides.

A second cross portion 6b, which extends substantially parallel with the first cross portions 6a, is spaced from the first cross portions 6a in a forward movement direction of the machine 1. The spacing may be on the order of 10-30 cm, preferably 15-25 cm.

The spaced apart cross portions 6a, 6b may be interconnected by one or more other portions 6c-6e.

The handle 6 may comprise respective first vertical members 6c, 6c', 6d, 6d', extending less than +/-45° from the vertical direction, preferably less than +/-30° from the vertical direction, or less than +/-20° from the vertical direction, from respective distal portions of the first cross portions 6a.

The handle 6 may further comprise respective second vertical members 6d, extending less than +/-45° from the vertical direction, preferably less than +/-30° from the vertical direction, or less than +/-20° from the vertical direction, from respective distal portions of the second cross portion 6b.

The first and second vertical members 6c, 6c', 6d, 6d' may, but need not, be parallel. The first vertical members 6c, 6c' may present a greater angle to the vertical direction than the second vertical members 6d, 6d'. The angle of the first vertical members 6c, 6c' may be more than 5° greater than that of the second vertical members 6c, 6c', 6d, 6d', preferably more than 10° or more than 15°.

The handle 6 may comprises a respective longitudinally extending member 6e, 6e', extending substantially parallel with the forward moving direction of the machine on a respective side of the attachment portion 6f and substantially perpendicular to the cross portions and providing respective bridges between distal portions of the first and second cross portions 6a, 6b.

The cross portions 6a, 6b and the longitudinal members 6e, 6e' may be integrated with each other. For example, the entire handle 6 may be formed from one piece of material, such as a tube or rod, which has been bent into the desired shape, and ends of which may be joined together to form an endless member.

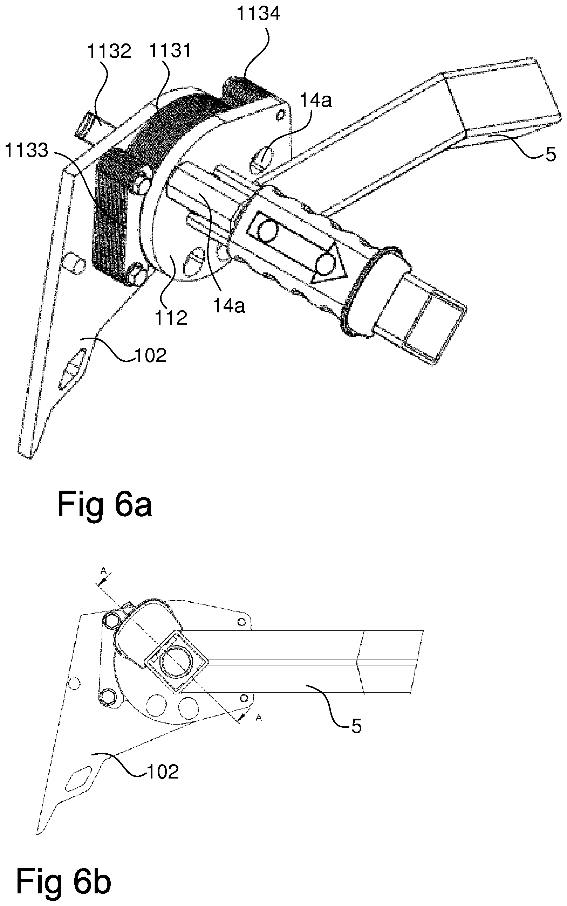

Figs 6a-6d schematically illustrate a locking device comprising a frictional locking device for preventing relative rotation between the machine frame 102 and the guide member 112, and a form based locking device for preventing relative rotation between the handle frame 5 and the guide member 112.

Referring to Fig. 6a, there is illustrated a portion of a machine frame 102 and a portion of the handle frame 5. There is also a guide member 112.

A first locking device 14a, 14b is provided for locking the handle frame 5 relative to the guide member 112. This locking device 14a, 14b is arranged substantially as the one disclosed above, and includes a plurality of fixed position recesses 14a and a pin 14b, which is biased towards the guide member 112, such that it will enter the recesses 14a when aligned therewith.

A second locking device 1131, 1132, 1133, 1134 is provided for locking the guide member 112 relative to the machine frame 102. This second locking device comprises a lamellae package 1131 comprising a pair of lamellae sets 1133, 1134. A first one 1133 of the lamellae sets is fixedly connected to the machine frame 102 and a second one of the lamellae sets is fixedly connected to the guide member 112. In an area of overlap between lamellae from the different sets, lamellae from the respective sets are arranged alternatingly, such that in the area of overlap, every second lamella belongs to the set 1133 attached to the machine frame 102 and the remaining lamellae belongs to the set 1134 attached to the guide member 112.

Fig. 6b is a side view of the handle arrangement illustrated in Fig. 6a.

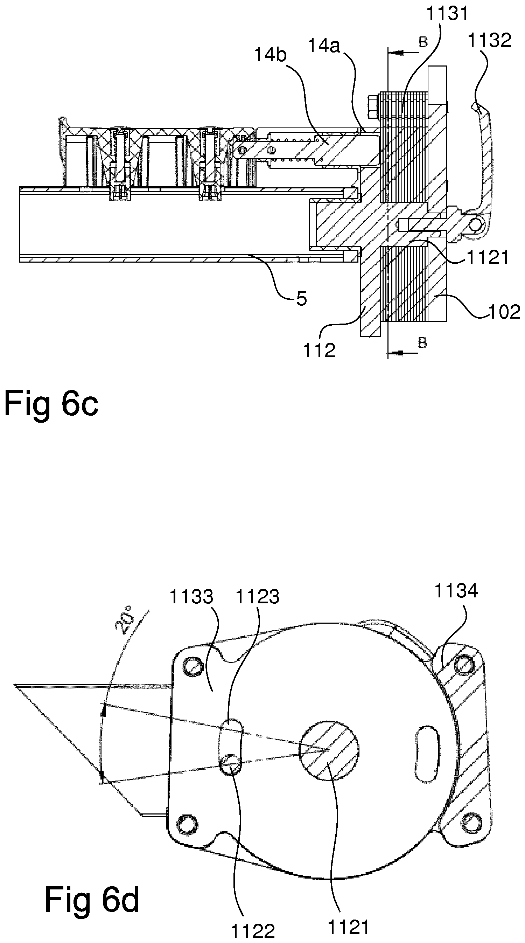

Fig. 6c is a cross sectional view taken along line A-A in Fig. 6b. Fig. 6c illustrates the guide member 112 being provided with an axle portion 1121, which extends partially through the lamella package 1131, in an area of overlap between the lamellae sets 1133, 1134.

A tensioner device, which is here illustrated as an excenter clamp 1132, engages the axle portion 1121 so as to provide a clamping force along the axial direction and thus between the guide member 112 and the machine frame 102.

Other types of tensioner devices may be used, such as nuts, bolts or the like.

Moreover, the lamella package may be dispensed with, in which case the guide member 112 may be clamped directly towards the machine frame 102 using an axial tensioner as illustrated in Fig. 6c.

Fig. 6d is a cross sectional view taken along line B-B in Fig. 6c and illustrates how the relative angle of rotation between the guide member and the machine frame 102 may be limited. As illustrated, the maximum range of angles may be on the order of 0°-30°, preferably 15°-30° or about 20°.

Hence, an angle limiting device may be provided in the form of a pin 1122, which is slidable in a slit 1123 that is curved with a bending radius about the axle 1121. The pin 1122 may be attached to the guide member 112 and the slit 1123 may be provided in the machine frame 102 and in the lamella package 1131. Alternatively, the pin 1122 may be attached to the machine frame 102 and the slit 1123 may be provided in the guide member 112 and in the lamella package 1131.

Referring back to Fig. 1b and Fig. 1c, it is noted that the handle 6 is in a position where it extends rearwardly from the handle frame 5. These are both operating positions and are suitable to provide good leverage effect relative to the machine 1, e.g. for turning and/or tilting.

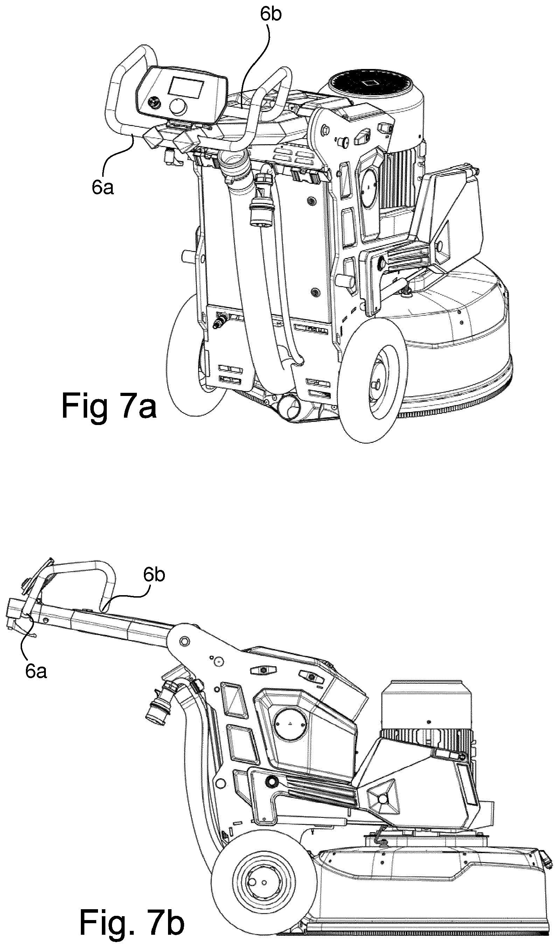

Referring to Figs 7a-7b, the handle 6 has instead been rotated upwardly and forwardly relative to the handle frame 5, such that the first cross member 6a and the attachment portion 6f are behind the second cross member 6b, as seen in the machine longtitudinal direction, or in the forward direction.

This position may be advantageous when it is desirable to walk more closely behind the machine 1, e.g. in order to get a better view of the grinding result.

## Claims

1. A floor grinding machine (1) for grinding floor surfaces of stone or stone-like material, the machine comprising:
a machine frame (2, 102),
a grinding head (3), supported by the machine frame (2, 102),
a motor (4), supported by the machine frame (2, 102) and operatively connected to the grinding head (3),
a handle frame (5), extending from the machine frame (2, 102), and pivotable relative to the machine frame (2, 102),
**characterised by**
a guide member (12, 112),
which is pivotable relative to the machine frame (2, 102) and pivotable relative to the handle frame (5), a first locking device (14), for locking the guide member (12, 112) relative to the handle frame (5), and
a second locking device (13), for locking the guide member (12, 112) relative to the machine frame (2, 102), wherein the guide member (12, 112) is pivotable relative to the machine frame (2, 102) about a first axis and the handle frame (5) is pivotable relative guide member (12, 112) about a second axis,
wherein said first and second axes are coaxial.

2. The floor grinding machine as claimed in claim 1, wherein the guide member (12, 112) is pivotable relative to the machine frame (2, 102) coaxially with the handle frame (5).

3. The floor grinding machine (1) as claimed in any one of the preceding claims, further comprising a pivot angle limiting device (15a, 15b), which limits the pivoting movement between the guide member (12, 112) and one of the machine frame (2, 102) and the handle frame (5).

4. The floor grinding machine (1) as claimed in any one of the preceding claims, wherein the first locking device (14) provides a continuum of relative positions between the handle frame (5) and the guide member (12, 112).

5. The floor grinding machine (1) as claimed in any one of the preceding claims, wherein the second locking device (13) provides a continuum of relative positions between the machine frame (2, 102) and the guide member (12, 112).

6. The floor grinding machine (1) as claimed in any one of claims 1-3 or 5, wherein the first locking device (14) provides at least two fixed relative positions between the handle frame (5) and the guide member (12, 112).

7. The floor grinding machine (1) as claimed in any one of claims 1-4 or 6, wherein the second locking device (13) provides at least two fixed relative positions between the machine frame (2, 102) and the guide member (12, 112).

8. The floor grinding machine (1) as claimed in claim 6 or 7, wherein one of the locking devices (13) provides a smaller angle between a pair of adjacent fixed positions than the other one (14).

9. The floor grinding machine (1) as claimed in any one of the preceding claims, wherein one of the locking devices (14) provides a greater angle difference between extreme positions than the other one (13).

10. The floor grinding machine (1) as claimed in any one of the preceding claims, wherein the handle frame (5) is pivotable relative to the machine frame (2, 102) between at least one transport position and at least one working position,
wherein the transport position is located such that a movement from the working position to the transport position comprises lifting the handle frame (5) upwardly.

11. The floor grinding machine (1) as claimed in any one of claims 1-9, wherein the handle frame (5) is pivotable relative to the machine frame (2, 102) between at least one transport position and at least one working position, wherein the transport position is located such that a movement from the working position to the transport position comprises lowering the handle frame (5).

12. A method for setting a position of a handle (5, 6) of a floor grinding machine (1) for grinding floor surfaces of stone or stone-like material, according to any one of the preceding claims, the method comprising:
setting a position of the handle frame (5) relative to the guide member (12, 112), and
setting a position of the guide member (12, 112) relative to the machine frame (2, 102).

13. The method as claimed in claim 12, wherein setting a position of the handle frame (5) relative to the guide member (12, 112) comprises:
pivoting the handle frame (5) relative to the machine frame (2, 102) and relative to the guide member (12, 112), and locking the handle frame (5) relative to the guide member (12, 112).

14. The method as claimed in claim 12 or 13, wherein setting a position of the guide member (12, 112) relative to a machine frame (2, 102) comprises: pivoting the handle (5) frame with the guide member (12, 112) relative to the machine frame (2, 102), and locking the guide member (12, 112) relative to the machine frame (2, 102).

## Patentansprüche

1. Bodenschleifmaschine (1) zum Schleifen von Bodenflächen aus Stein oder einem steinartigen Material, wobei die Maschine Folgendes umfasst:
einen Maschinenrahmen (2, 102),
einen Schleifkopf (3), der von dem Maschinenrahmen (2, 102) getragen wird,
einen Motor (4), der von dem Maschinenrahmen (2, 102) getragen wird und mit dem Schleifkopf (3) wirkverbunden ist,
einen Griffrahmen (5), der sich vom Maschinenrahmen (2, 102) erstreckt und in Bezug zum Maschinenrahmen (2, 102) verschwenkbar ist,
**gekennzeichnet durch**
ein Führungselement (12, 112), das in Bezug zum Maschinenrahmen (2, 102) verschwenkbar ist und in Bezug zum Griffrahmen (5) verschwenkbar ist,
eine erste Verriegelungsvorrichtung (14), um das Führungselement (12, 112) in Bezug zum Griffrahmen (5) zu verriegeln, und
eine zweite Verriegelungsvorrichtung (13), um das Führungselement (12, 112) in Bezug zum Maschinenrahmen (2, 102) zu verriegeln,
wobei das Führungselement (12, 112) in Bezug zum Maschinenrahmen (2, 102) um eine erste Achse verschwenkbar ist und der Griffrahmen (5) in Bezug zum Führungselement (12, 112) um eine zweite Achse verschwenkbar ist,
wobei die erste und zweite Achse koaxial sind.

2. Bodenschleifmaschine nach Anspruch 1, wobei das Führungselement (12, 112) in Bezug zum Maschinenrahmen (2, 102) koaxial zum Griffrahmen (5) verschwenkbar ist.

3. Bodenschleifmaschine (1) nach einem der vorstehenden Ansprüche, ferner eine Schwenkwinkelbegrenzungsvorrichtung (15a, 15b) umfassend, die die Schwenkbewegung zwischen dem Führungselement (12, 112) und dem Maschinenrahmen (2, 102) oder dem Griffrahmen (5) einschränkt.

4. Bodenschleifmaschine (1) nach einem der vorstehenden Ansprüche, wobei die erste Verriegelungsvorrichtung (14) ein Kontinuum relativer Positionen zwischen dem Griffrahmen (5) und dem Führungselement (12, 112) vorsieht.

5. Bodenschleifmaschine (1) nach einem der vorstehenden Ansprüche, wobei die zweite Verriegelungsvorrichtung (13) ein Kontinuum relativer Positionen zwischen dem Maschinenrahmen (2, 102) und dem Führungselement (12, 112) vorsieht.

6. Bodenschleifmaschine (1) nach einem der Ansprüche 1-3 oder 5, wobei die erste Verriegelungsvorrichtung (14) mindestens zwei feste relative Positionen zwischen dem Griffrahmen (5) und dem Führungselement (12, 112) vorsieht.

7. Bodenschleifmaschine (1) nach einem der Ansprüche 1-4 oder 6, wobei die zweite Verriegelungsvorrichtung (13) mindestens zwei feste relative Positionen zwischen dem Maschinenrahmen (2, 102) und dem Führungselement (12, 112) vorsieht.

8. Bodenschleifmaschine (1) nach Anspruch 6 oder 7, wobei eine der Verriegelungsvorrichtungen (13) einen kleineren Winkel zwischen einem Paar angrenzender fester Positionen vorsieht als die andere (14).

9. Bodenschleifmaschine (1) nach einem der vorstehenden Ansprüche, wobei eine der Verriegelungsvorrichtungen (14) eine größere Winkeldifferenz zwischen Extremstellungen als die andere (13) vorsieht.

10. Bodenschleifmaschine (1) nach einem der vorstehenden Ansprüche, wobei der Griffrahmen (5) in Bezug zum Maschinenrahmen (2, 102) zwischen mindestens einer Transportposition und mindestens einer Arbeitsposition verschwenkbar ist,
wobei die Transportposition derart angeordnet ist, dass eine Bewegung von der Arbeitsposition zur Transportposition das Anheben des Griffrahmens (5) nach oben umfasst.

11. Bodenschleifmaschine (1) nach einem der Ansprüche 1-9, wobei der Griffrahmen (5) in Bezug zum Maschinenrahmen (2, 102) zwischen mindestens einer Transportposition und mindestens einer Arbeitsposition verschwenkbar ist, wobei die Transportposition derart angeordnet ist, dass eine Bewegung von der Arbeitsposition zur Transportposition das Absenken des Griffrahmens (5) umfasst.

12. Verfahren zum Einstellen einer Position eines Griffs (5, 6) einer Bodenschleifmaschine (1) zum Schleifen von Bodenflächen aus Stein oder einem steinartigen Material nach einem der vorstehenden Ansprüche, wobei das Verfahren Folgendes umfasst:
Einstellen einer Position des Griffrahmens (5) in Bezug zum Führungselement (12, 112) und
Einstellen einer Position des Führungselements (12, 112) in Bezug zum Maschinenrahmen (2, 102).

13. Verfahren nach Anspruch 12, wobei das Einstellen einer Position des Griffrahmens (5) in Bezug zum Führungselement (12, 112) Folgendes umfasst:
Verschwenken des Griffrahmens (5) in Bezug zum Maschinenrahmen (2, 102) und in Bezug zum Führungselement (12, 112) und
Verriegeln des Griffrahmens (5) in Bezug zum Führungselement (12, 112).

14. Verfahren nach Anspruch 12 oder 13, wobei das Einstellen einer Position des Führungselements (12, 112) in Bezug zu einem Maschinenrahmen (2, 102) Folgendes umfasst:
Verschwenken des Griffrahmens (5) mit dem Führungselement (12, 112) in Bezug zum Maschinenrahmen (2, 102) und Verriegeln des Führungselements (12, 112) in Bezug zum Maschinenrahmen (2, 102).

## Revendications

1. Machine de ponçage de sol (1) pour poncer des surfaces de sol en pierre ou matériau de type pierre, la machine comprenant :
un cadre de machine (2, 102),
une tête de ponçage (3), supportée par le cadre de machine (2, 102),
un moteur (4), supporté par le cadre de machine (2, 102) et fonctionnellement raccordé à la tête de ponçage (3),
un cadre de poignée (5), s'étendant à partir du cadre de machine (2, 102) et pouvant pivoter relativement au cadre de machine (2, 102),
**caractérisée par**
un élément de guidage (12, 112) qui peut pivoter relativement au cadre de machine (2, 102) et peut pivoter relativement au cadre de poignée (5),
un premier dispositif de verrouillage (14), pour verrouiller l'élément de guidage (12, 112) relativement au cadre de poignée (5), et
un second dispositif de verrouillage (13), pour verrouiller l'élément de guidage (12, 112) relativement au cadre de machine (2, 102),
dans laquelle
l'élément de guidage (12, 112) peut pivoter relativement au cadre de machine (2, 102) autour d'un premier axe et le cadre de poignée (5) peut pivoter relativement à l'élément de guidage (12, 112) autour d'un second axe,
dans laquelle lesdits premier et second axes sont coaxiaux.

2. Machine de ponçage de sol selon la revendication 1, dans laquelle l'élément de guidage (12, 112) peut pivoter relativement au cadre de machine (2, 102) coaxialement avec le cadre de poignée (5).

3. Machine de ponçage de sol (1) selon l'une quelconque des revendications précédentes, comprenant en outre un dispositif limiteur d'angle de pivotement (15a, 15b), qui limite le mouvement de pivotement entre l'élément de guidage (12, 112) et un du cadre de machine (2, 102) et du cadre de poignée (5).

4. Machine de ponçage de sol (1) selon l'une quelconque des revendications précédentes, dans laquelle le premier dispositif de verrouillage (14) fournit un continuum de positions relatives entre le cadre de poignée (5) et l'élément de guidage (12, 112).

5. Machine de ponçage de sol (1) selon l'une quelconque des revendications précédentes, dans laquelle le second dispositif de verrouillage (13) fournit un continuum de positions relatives entre le cadre de machine (2, 102) et l'élément de guidage (12, 112).

6. Machine de ponçage de sol (1) selon l'une quelconque des revendications 1 à 3 ou 5, dans laquelle le premier dispositif de verrouillage (14) fournit au moins deux positions relatives fixes entre le cadre de poignée (5) et l'élément de guidage (12, 112).

7. Machine de ponçage de sol (1) selon l'une quelconque des revendications 1 à 4 ou 6, dans laquelle le second dispositif de verrouillage (13) fournit au moins deux positions relatives fixes entre le cadre de machine (2, 102) et l'élément de guidage (12, 112).

8. Machine de ponçage de sol (1) selon la revendication 6 ou 7, dans laquelle un des dispositifs de verrouillage (13) fournit un angle plus petit entre une paire de positions fixes adjacentes que l'autre (14).

9. Machine de ponçage de sol (1) selon l'une quelconque des revendications précédentes, dans laquelle un des dispositifs de verrouillage (14) fournit une différence d'angle plus grande entre des positions extrêmes que l'autre (13).

10. Machine de ponçage de sol (1) selon l'une quelconque des revendications précédentes, dans laquelle le cadre de poignée (5) peut pivoter relativement au cadre de machine (2, 102) entre au moins une position de transport et au moins une position de travail,
dans laquelle la position de transport est située de telle sorte qu'un mouvement depuis la position de travail jusqu'à la position de transport comprenne le levage du cadre de poignée (5) vers le haut.

11. Machine de ponçage de sol (1) selon l'une quelconque des revendications 1 à 9, dans laquelle le cadre de poignée (5) peut pivoter relativement au cadre de machine (2, 102) entre au moins une position de transport et au moins un position de travail,
dans laquelle la position de transport est située de telle sorte qu'un mouvement depuis la position de travail jusqu'à la position de transport comprenne l'abaissement du cadre de poignée (5).

12. Procédé pour régler une position d'une poignée (5, 6) d'une machine de ponçage de sol (1) pour poncer des surfaces de sol de pierre ou matériau de type pierre, selon l'une quelconque des revendications précédentes, le procédé comprenant :
le réglage d'une position du cadre de poignée (5) relativement à l'élément de guidage (12, 112), et
le réglage d'une position de l'élément de guidage (12, 112) relativement au cadre de machine (2, 102) .

13. Procédé selon la revendication 12, dans lequel le réglage d'une position du cadre de poignée (5) relativement à l'élément de guidage (12, 112) comprend :
le pivotement du cadre de poignée (5) relativement au cadre de machine (2, 102) et relativement à l'élément de guidage (12, 112) et le verrouillage du cadre de poignée (5) relativement à l'élément de guidage (12, 112) .

14. Procédé selon la revendication 12 ou 13, dans lequel le réglage d'une position de l'élément de guidage (12, 112) relativement à un cadre de machine (2, 102) comprend :
le pivotement du cadre de poignée (5) avec l'élément de guidage (12, 112) relativement au cadre de machine (2, 102), et le verrouillage de l'élément de guidage (12, 112) relativement au cadre de machine (2, 102).
